Europäisches Patentamt

European Patent Office

Office européen des brevets

(11) Veröffentlichungsnummer: **0 475 539 A2**

# EUROPÄISCHE PATENTANMELDUNG

(21) Anmeldenummer: **91250178.0**

(22) Anmeldetag: **03.07.91**

(51) Int. Cl.5: **F28F 13/18**, F16N 39/04

(30) Priorität: **03.07.90 DD 342460**

(43) Veröffentlichungstag der Anmeldung:
**18.03.92 Patentblatt 92/12**

(84) Benannte Vertragsstaaten:
**AT BE DE DK ES FR GB IT LU NL SE**

(71) Anmelder: **ZENTRALINSTITUT FÜR FESTKÖRPERPHYSIK UND WERKSTOFFORSCHUNG**
**Helmholtzstrasse 20**
**O-8027 Dresden(DE)**
Anmelder: **DRAHT- UND SCHRAUBENWERKE GMBH**
**Clara-Zetkin-Strasse 28**
**O-7980 Finsterwalde(DE)**

(72) Erfinder: **Weinhold, Harri**
**Am Schäferberg 5a**
**O-8216 Kreischa(DE)**
Erfinder: **Rösch, Günter**
**Stralsunder Strasse 2a**
**O-8400 Riesa(DE)**
Erfinder: **Rauschenbach, Dieter**
**Sadisdorfer Weg 2a**
**O-8027 Dresden(DE)**
Erfinder: **Gehre, Dietmar**
**Hans-Beimler Strasse 19**
**O-8400 Riesa(DE)**
Erfinder: **Vogel, Heinz-Rüdiger**
**Augsburger Strasse 47**
**O-8019 Dresden(DE)**
Erfinder: **Schönitz, Bernd**
**Greifswalder Strasse 2b**
**O-8400 Riesa(DE)**
Erfinder: **Reichert, Jürgen**
**Tauscher Strasse 27**
**O-8021 Dresden(DE)**
Erfinder: **Wächter, Ernst**
**Loebestrasse 12**
**O-8400 Riesa(DE)**
Erfinder: **Nerger, Dieter**
**Otto-Dix-Ring 15**
**O-8020 Dresden(DE)**

(54) **Einrichtung zum Übertragen von Wärme in ein Schmiermittel und Verfahren zu deren Herstellung.**

(57) Die Erfindung betrifft eine Einrichtung zum Übertragen von Wärme mittels eines Lamellenwärmeübertragers in ein graphit- und alkalisilikatfreies flüssiges Schmiermittel auf Wasserbasis sowie ein Verfahren zur Herstellung der Einrichtung. Der Erfindung liegt die Aufgabe zugrunde, eine Einrichtung zu entwickeln, mit der in technisch einfacher Weise ein hoher Wärmefluß bei Vermeidung einer Verunreinigung des Schmiermittels realisierbar ist. Erfindungsgemäß wird auf dem von Heißdampf (1) durchströmten Rohr (2) eines Lamellenwärmeübertragers mit einem Lamellenabstand von mindestens 3 mm und auf maximal 15 % der an das Rohr (2) angrenzenden Lamellenoberfläche eine bis zu 0,5 mm dicke wärmedämmende Schicht (4) aus den im aufzuheizenden Schmiermittel enthaltenen Feststoffen erzeugt. Mit dieser Bedeckung des Lamellenwärmeübertragers ist ein optimaler Wärmeübergang unter Vermeidung einer nachteiligen Blasenbildung garantiert.

Die Erfindung betrifft eine Einrichtung zum Übertragen von Wärme mittels eines Lamellenwärmeübertragers in ein graphit- und alkalisilikatfreies flüssiges Schmiermittel auf Wasserbasis, das zur Beschichtung von metallischem Umformgut eingesetzt wird, sowie ein Verfahren zur Herstellung dieser Einrichtung.

Zur Beschichtung von metallischem Gut, das zur Umformung vorgesehen ist, werden u.a. graphit- und alkalisilikatfreie flüssige Schmiermittel verwendet, welche in Wasser Fettsäuresalz-Schmierstoff sowie einen oder mehrere als Filmbildner und/oder Druckstabilisatoren wirkende Stoffe enthalten. Hierbei handelt es sich insbesondere um Alkaliborate, Ester von Alkaliboraten, Polyvinylalkohol, oxidativ modifizierten Polyvinylalkohol und verkleisterte Stärke. Zum Zwecke einer schnellen Trocknung des Schmiermittels auf dem Umformgut nach der Beschichtung ist es vorteilhaft, mit erwärmten Schmiermitteln zu arbeiten. Zur Erwärmung des Schmiermittels kommen Lamellenwärmeübertrager in Betracht, die in einer Schmiermittelwanne anzuordnen sind. Die Wärmeübertrager bestehen aus von einem Wärmeübertragungsmedium durchströmten Rohren, die mit oberflächenvergrößernden Lamellen bestückt sind. Durch die Rohre kann dabei als Wärmeübertragungsmedium beispielsweise Heißdampf strömen.

Es ist bei derartigen mit Heißdampf betriebenen Wärmeübertragern bereits bekannt, daß sich beim Wärmeübergang in eine Flüssigkeit an der Oberfläche des Übertragers Dampfblasen bilden. Diese Dampfblasenbildung führt dazu, daß sich der Wärmeübergang verschlechtert und daß dieser - bedingt durch Ablösung und Neubildung der Dampfblasen - auch erheblichen Schwankungen unterworfen ist. Um diesen Erscheinungen entgegenzuwirken, ist es bekannt, mindestens einen Teil der äußeren Oberfläche des Wärmeübertragers mit einer Deckschicht zu versehen, die eine geringere Wärmeleitfähigkeit als der Werkstoff des Wärmeübertragers besitzt (DE-OS 2 156 711).

Die Deckschicht besteht dabei aus Isolierstoff, beispielsweise Elektroisolierlack, oder ist eine Oxidschicht. Hiermit wird ein optimaler Wärmeübergang angestrebt, basierend auf dem Gedanken, die Temperaturdifferenz zwischen der Oberfläche des Wärmeübertragers und der zu erwärmenden Flüssigkeit so einzustellen und/oder zu steuern bzw. zu regeln, daß sie an der Austauschfläche stets unter der kritischen Temperaturdifferenz liegt, bei der sich ein zusammenhängender stabiler Dampffilm an der Oberfläche des Wärmeübertragers bildet. Die praktische Umsetzung dieser Zielstellung ist jedoch kompliziert und mit relativ hohem Aufwand verbunden, insbesondere hinsichtlich der Bestimmung des Deckschichtmaterials, der Deckschichtdicke und -ausdehnung sowie der Aufbringungsweise im Hinblick auf die Vermeidung einer zonenweise eintretende Ablösung der Deckschicht. Durch eine zonenweise Ablösung der Deckschicht wäre zum einen der angestrebte Effekt eines gezielten Wärmeübergangs gestört, und andererseits würde die zu erwärmende Flüssigkeit verunreinigt, was z.B. zu Filterverstopfungen führen würde.

Das Ziel der Erfindung besteht in der Erhöhung der Zuverlässigkeit und des Wirkungsgrades von Wärmeübertragern bei gleichzeitiger Senkung des Herstellungsaufwandes.

Der Erfindung liegt die Aufgabe zugrunde, eine Einrichtung zum Übertragen von Wärme in ein graphit- und alkalisilikatfreies flüssiges Schmiermittel auf Wasserbasis unter Verwendung eines mit Heißdampf betriebenen Lamellenwärmeübertragers aus Stahl zu entwickeln, mit der in technisch einfacher Weise ein hoher Wärmefluß bei Vermeidung einer Verunreinigung des Schmiermittels realisierbar ist.

Diese Aufgabe ist nach der Erfindung dadurch gelöst, daß auf dem vom Heißdampf durchströmten Rohr eines Lamellenwärmeübertragers mit einem Lamellenabstand von mindestens 3 mm und auf maximal 15 % der an das Rohr angrenzenden Lamellenoberfläche eine bis zu 0,5 mm dicke wärmedämmende Schicht aus den im aufzuheizenden Schmiermittel enthaltenen Feststoffen vorhanden ist.

Vorzugsweise ist die Schicht 0,15 bis 0,4 mm dick. Nach einer zweckmäßigen Ausgestaltung der Erfindung enthält die Schicht 22 bis 44 Massenteile Fettsäuresalze, insbes. Erdalkalifettsäuresalze, 35 bis 44 Massenanteile Alkaliborat, 22 bis 35 Massenanteile Polyvinylalkohol oder oxidativ modifizierten Polyvinylalkohol sowie sich aus den genannten Stoffen gegebenenfalls bildende Reaktionsprodukte. Nach einer weiteren zweckmäßigen Ausgestaltung sind in der Schicht 35 bis 40 Massenanteile Fettsäuresalze, vorzugsweise Erdalkalifettsäuresalze, 22 bis 35 Massenanteile Alkaliborat, 30 bis 70 Massenanteile Polyphosphat und 2 bis 10 Massenanteile Alkali- oder Erdalkalisalze von Oligoalpha-methylstyren-Dicarbonsäuren enthalten.

Zur Herstellung einer derartigen Einrichtung wird nach der Erfindung auf einem unbeschichteten Lamellenwärmeübertrager unmittelbar innerhalb des aufzuheizenden Schmiermittels eine bis zu 0,5 mm dicke Schicht aus den im Schmiermittel enthaltenen Feststoffen unter Anwendung einer im Bereich von 120 bis 170 °C liegenden Heißdampftemperatur abgeschieden, wobei die Heißdampftemperatur im angegebenen Temperaturbereich so gewählt wird, daß sich die Feststoffschicht auf dem vom Heißdampf durchströmten Rohr des Lamellenwärmeübertragers und auf maximal 15 % der an das Rohr angrenzenden Lamellenoberfläche aufbaut und in ihrer Flächenausdehnung während des Dauerbetriebs der Einrichtung erhalten bleibt.

Mit dem Erreichen der erfindungsgemäß vorgegebenen Bedeckung des Lamellenwärmeübertragers ist ein optimaler Wärmeübergang unter Vermeidung einer nachteiligen Blasenbildung garantiert.

Die zugehörige Zeichnung stellt einen Querschnitt durch einen Lamellenwärmeübertrager dar, bei dem auf dem mit Heißdampf 1 mit einer Temperatur von 125 °C durchströmten Rohr 2 (Abmessungen: 18 x 2 mm) und auf 5 % der an das Rohr 2 angrenzenden Oberfläche der Lamellen 3 eine ≦0,2 mm dicke wärmedämmende Schicht 4 aus dem Feststoff des aufzuheizenden Schmiermittels folgender Zusammensetzung aufgebracht ist:
5 Masse-% Calciumstearat
5 Masse-% Borax
1,5 Masse-% oxidativ modifizierter Polyvinylalkohol
Rest Nonylphenolpolyethylenoxid-Addukt-haltiges-Wasser
(ca. 0,25 Masse-%)

Die Lamellengröße beträgt 115 x 55 mm und der Lamellenabstand 5 mm. Mit dieser Einrichtung sowie den angegebenen Parametern ist es möglich, das obengenannte Schmiermittel kontinuierlich ohne Störungen im Dauerbetrieb auf eine Schmiermittelbadtemperatur von 85 °C aufzuheizen.

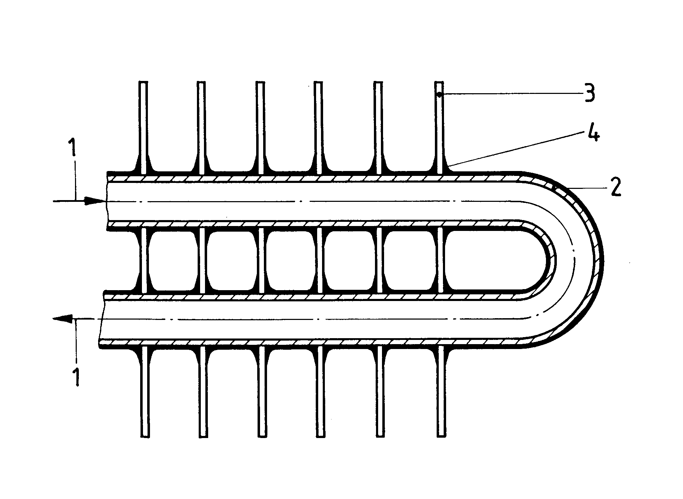

**Patentansprüche**

1. Einrichtung zum Übertragen von Wärme in ein graphit- und alkalisilikatfreies flüssiges Schmiermittel, welches in Wasser Fettsäuresalz-Schmierstoff sowie einen oder mehrere als Filmbildner und/oder Druckstabilisatoren wirkende Stoffe, wie Alkaliborate, Ester von Alkaliboraten, Polyvinylalkohol, oxidativ modifizierten Polyvinylalkohol und verkleisterte Stärke, enthält, bestehend aus einem mit Heißdampf betriebenen Lamellenwärmeübertrager aus Stahl, dadurch gekennzeichnet, daß auf dem vom Heißdampf durchströmten Rohr eines Lamellenwärmeübertragers mit einem Lamellenabstand von mindestens 3 mm und auf maximal 15 % der an das Rohr angrenzenden Lamellenoberfläche eine bis zu 0,5 mm dicke wärmedämmende Schicht aus den im aufzuheizenden Schmiermittel enthaltenen Feststoffen vorhanden ist.

2. Einrichtung nach Anspruch 1, dadurch gekennzeichnet, daß die Schicht 0,15 bis 0,4 mm dick ist.

3. Einrichtung nach Anspruch 1, dadurch gekennzeichnet, daß in der Schicht 22 bis 44 Massenanteile Fettsäuresalze, insbesondere Erdalkalifettsäuresalze, 35 bis 44 Massenanteile Alkaliborat, 22 bis 35 Massenanteile Polyvinylalkohol oder oxidativ modifizierter Polyvinylalkohol sowie sich aus den genannten Stoffen gegebenenfalls bildende Reaktionsprodukte enthalten sind.

4. Einrichtung nach Anspruch 1, dadurch gekennzeichnet, daß in der Schicht 35 bis 44 Massenanteile Fettsäuresalze, vorzugsweise Erdalkalifettsäuresalze, 22 bis 35 Massenanteile Alkaliborat, 30 bis 70 Massenanteile Polyphosphat und 2 bis 10 Massenanteile Alkali- oder Erdalkalisalze von Oligo-alpha-methylstyren-Dicarbonsäuren enthalten sind.

5. Verfahren zur Herstellung einer Einrichtung zum Übertragen von Wärme in ein graphit- und alkalisilikatfreies flüssiges Schmiermittel, das in Wasser Fettsäuresalz-Schmierstoff sowie einen oder mehrere als Filmbildner und/oder Druckstabilisatoren wirkende Stoffe, wie Alkaliborate, Ester von Alkaliboraten, Polyvinylalkohol, oxidativ modifizierten Polyvinylalkohol und verkleisterte Stärke, enthält, bestehend aus einem mit Heißdampf betriebenen Lamellenwärmeübertrager aus Stahl, dadurch gekennzeichnet, daß auf dem Lamellenwärmeübertrager unmittelbar innerhalb des aufzuheizenden Schmiermittels eine bis zu 0,5 mm dicke Schicht aus den im Schmiermittel enthaltenen Feststoffen unter Anwendung einer im Bereich von 120 bis 170 °C liegenden Heißdampftemperatur abgeschieden wird, wobei die Heißdampftemperatur im angegebenen Temperaturbereich so gewählt wird, daß sich die Feststoffschicht auf dem vom Heißdampf durchströmten Rohr des Lamellenwärmeübertragers und auf maximal 15 % der an das Rohr angrenzenden Lamellenoberfläche aufbaut und in ihrer Flächenausdehnung während des Dauerbetriebes der Einrichtung erhalten bleibt.